# EUROPEAN PATENT SPECIFICATION

(11) **EP 2 361 356 B1**
(45) Date of publication and mention of the grant of the patent: **08.01.2014**
(21) Application number: 09827807.0
(22) Date of filing: 02.11.2009
(51) Int. Cl.: F21S 9/04, F03D 1/04, F03D 3/04

(54) **POWER INCREASING POLE-LIKE ARRANGEMENT FOR AIR TURBINE**
LEISTUNGSVERSTÄRKENDE MASTÄHNLICHE ANORDNUNG FÜR EINE LUFTTURBINE
AMÉNAGEMENT DU TYPE POTEAU AUGMENTANT L ÉNERGIE POUR UNE TURBINE À AIR

(30) Priority: 24.11.2008 SE 0802459
(43) Date of publication of application: 31.08.2011
(73) Proprietor: Östergötlands Fastighetsservice Samt El Och Larm I, 602 20 Norrköping (SE); Sanvik, Thomas, 603 80 Norrköping (SE)
(72) Inventor: SANVIK, Thomas, S-603 80 Norrköping (SE)
(74) Representative: Eriksson, Kjell
(86) International application number: PCT/SE2009/000481
(87) International publication number: WO 2010/059092

(56) References cited:
- WO-A1-2006/022590
- CN-Y- 201 066 074
- DE-A1- 19 503 512
- DE-U1-202007 013 376
- GB-A- 2 246 173
- GB-A- 2 360 834
- US-A1- 2008 037 243

## Description

The present invention relates to pole-like arrangement according to the introductory portion of the independent claim.

In particular, it relates to such a pole-like arrangement provided with a lamp.

### Background of the invention

Several different types of alternative energy sources need an elevated arrangement for mounting, such as wind power plants and solar cell power plant. It is practical and cost effective to mount these on pre-existing poles such as lamp posts.

An example of use of present poles is presented in DE19518838A1, which discloses a lamp post with a small wind power plant. The post has inlet openings on the sides of the post that collects air flux from the wind and forces it through the hollow interior of the post. Inside the post is arranged a turbine with a generator that generates power. The inlet openings is however only able to collect a limited flux of air due to their limited size.

WO9313355A1 discloses another lamp post with a small wind power plant. The power from the wind power plant may be used to power the lamp and connectors may be provided on the post such that the power may be used externally. The small turbine on the upper part of the wind power plant is however only able to produce a small electrical power as it is only able to collect a small air flow.

DE 19503512, CN20106607A and US2008/0037243 also disclose state-of-the-art posts.

An object of the invention is therefore to provide a pole-like arrangement tha is able to generate more power without the need for several separate generators.

These and other objects are attained by a pole-like arrangement according to the characterising portion of the independent claim.

### Summary of the invention

The invention relates to a pole-like arrangement, typically a lamp post, provided with at least one air turbine 4, 4a, b with a generator. At least one air conduit extends through the interior of the pole, the conduit having a mouth, and the air turbine is arranged at the top of the pole and in the air outflow from the mouth of the at least one conduit. By arranging the turbine in this fashion, a single turbine may advantageously benefit both from direct wind flow and from the wind flow emanating from the air conduits. In a particularly advantageous embodiment, the pole is provided with inlets 3a-d on the sides of the pole that gathers wind flow.

In yet another advantageous embodiment the air turbine is provided with a wind collector 10 with a wider inlet directed towards the turbine and an outlet that via a reunion pipe 11 generates an air flow at the mouth of the air conduit directed towards the turbine.

To improve the efficiency further, the air turbine 4, 4a, b may be embodied as a double rotor 4a, b. In a particularly advantageous embodiment, the double rotor 4a, b comprises a front rotor 4a and a rear rotor 4b with equal number of rotor blades, where the rotors are shifted with respect to each other essentially half the angle between to adjoining rotor blades.

### Brief description of the drawings

Fig. 1 shows a first embodiment of the invention in partial cross section
Fig. 2 shows a second embodiment of the invention
Fig. 3 shows a third embodiment of the invention

### Description of preferred embodiments

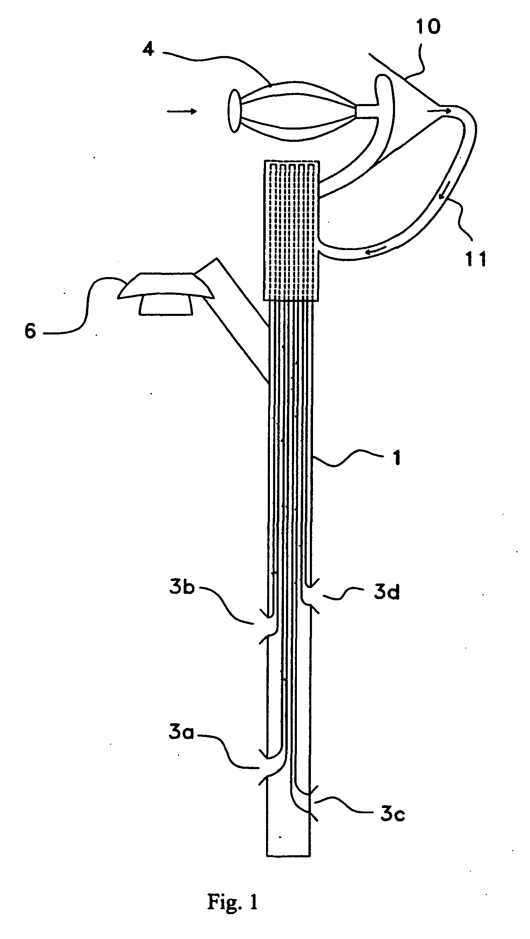

Fig. 1 shows a first embodiment of the invention in partial cross section. The figure shows a pole 1 with a lamp 6 and acts as is lamp post. The lamp sits on an element that extends from the pole, and at the top of the pole a turbine 4 is arranged with a generator for generation of power from air flowing. The turbine is arranged on a rotor part 7 that allows for the turbine with generator and rotor part to follow the direction of the wind and constantly being optimally directed for maximum generation of wind power.

The pole 1 has four conduits that extend from inlets 3a-d on the sides of the pole to mouths at the top of the pole. Around the inlets 3a-d, funnel like units are arranged, and the inlets are arranged to collect a larger flow of air that the turbine itself is able to, and blow this on or against the turbine. The rotor part 7 has openings air from the mouths of the conduits to blow through the rotor part and hit the turbine.

The turbine sits in front of a wind collector 10 that is directed with its larger mouth towards the turbine and the flowing air, while it at its other end is narrower and falls into a reunition pipe 11. As the wind blows against the wind collector 10, an air flow is forced into the reunion pipe which is connected to a conduit in the rotor part 7. The rotor part conduit ends at the rotor part top, near the top of the pole, and the flows from the inlets 3a-d and the flow from the reunion pipe cooperates to force the turbine to rotate.

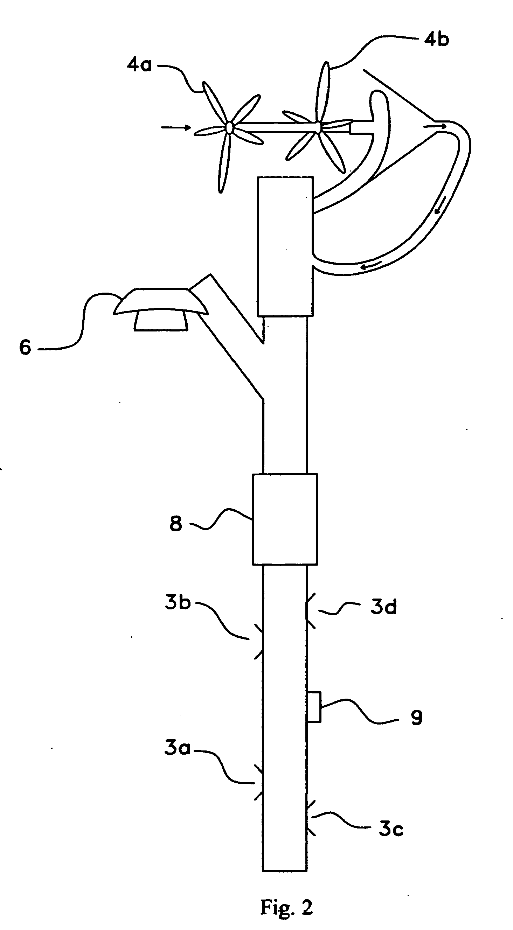

Fig. 2 shows a second embodiment of the invention which comprises a differently formed rotor than the Savionus rotor of the first embodiment. In its place are used a pair of rotors of propeller type, where the two rotors 4a, b are rotated with respect to each other such that a rotor blade from the rear rotor 4b is arranged in the space between two rotor blades of the front rotor 4a. With a turbine embodied this way the air flow, both directly from the wind and via the mouths of the conduits, may be utilized more efficiently. The figure does not show a cross section, so it is not illustrated, but the mouths of the conduits are obviously directed such that the air flow from them drives the turbine.

An electronics unit 8 is arranged on the pole that comprises battery, control electronics controlling charging and discharging of the battery, generation of desired voltages for supplying to the power grid, local use in the lamp or being accessible at a connector 9 on the pole. The electronics unit may further be controlled by a photo detector that affects when and how the lamp is being switched on or off. The connector 9 is intended for powering or charging electrical devices such as for example electrical golf carts or electrical lawn mowers.

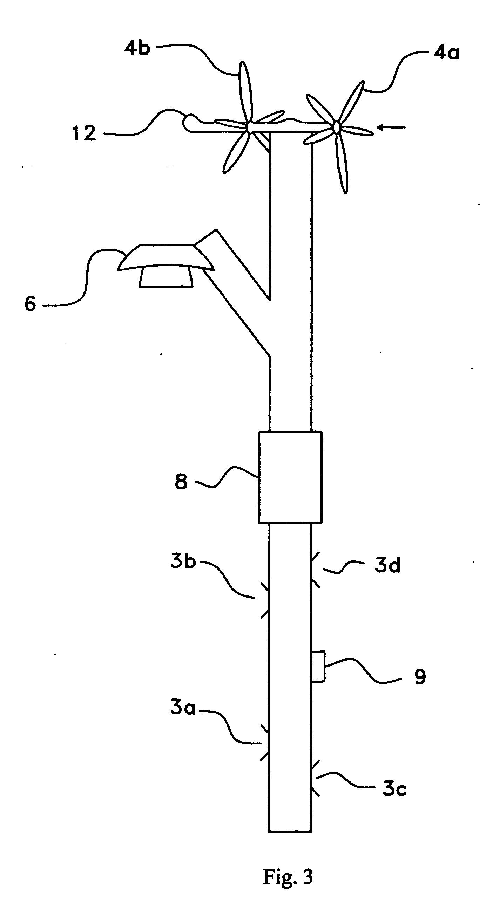

Fig. 3 shows a third embodiment of the invention that lacks the wind collector 10 of the second embodiment, but has a similar double rotor. The double rotor sits on a guide fin 12 that directs the double rotor towards the wind. In this embodiment too, the mouths from the internal conduits are appropriately directed for driving the double rotor to turn.

## Claims

1. A pole-like arrangement provided with at least one air turbine (4, 4a, b) with a generator, where at least one air conduit extends through the interior of the pole, said conduit having a mouth and at least one inlet (3a-d) on the sides of the pole, **characterised in that** said air turbine is arranged at the top of the pole and in the air outflow from the mouth of the at least one conduit, and where the air turbine is provided with a wind collector (10) with a wider inlet directed towards the turbine and an outlet that via a reunion pipe (11) generates an air flow at the mouth of the air conduit directed towards the turbine.

2. An arrangement according to claim 1, **characterised in that** said air turbine (4, 4a, b) is embodied as a double rotor (4a, b).

3. An arrangement according to claim 2, **characterised in that** said double rotor (4a, b) comprises a front rotor (4a) and a rear rotor (4b) with equal number of rotor blades, where the rotors are shifted with respect to each other essentially half the angle between to adjoining rotor blades.

4. An arrangement according to any one of the previous claims, **charactcrised in** that said pole is provided with an outlet (9) for accessing electricity from the arrangement.

5. An arrangement according to any one of the previous claims, **characterised in that** said pole is provided with at least one lamp (6).

## Patentansprüche

1. Anordnung nach Art eines Mastes, welchem zumindest einer Luftturbine (4, 4a, b) mit einem Generator versehen ist, wobei zumindest eine Luftleitung sich durch das Innere des Mastes erstreckt, die Leitung eine Mündung und zumindest einen Einlass (3a-d) an den Seiten des Mastes hat, **dadurch gekennzeichnet, dass** die Luftturbine an der Spitze des Mastes und in dem Luftauslass aus der Mündung der zumindest einen Leitung angeordnet ist und wobei die Luftturbine mit einem Windsammler (10) mit einem breiteren Einlass in Richtung der Turbine und einem Auslass versehen ist, der über eine Rückführleitung (11) einen Luftstrom an der Mündung der Luftleitung erzeugt, welche in Richtung der Turbine gerichtet ist.

2. Anordnung nach Anspruch 1, **dadurch gekennzeichnet, dass** die Luftturbine (4, 4a, b) als Doppelrotor (4a, b) ausgestaltet ist.

3. Anordnung nach Anspruch 2, **dadurch gekennzeichnet, dass** der Doppelrotor (4a, b) einen Frontrotor (4a) und einen rückwärtigen Rotor (4b) mit einer gleichen Anzahl von Rotorblättern aufweist, wobei die Rotoren relativ zueinander um die Hälfte des Winkels zwischen benachbarten Rotorblättern verschoben bzw. verdreht sind.

4. Anordnung nach einem der vorherigen Ansprüche, **dadurch gekennzeichnet, dass** der Mast mit einem Auslass (9) für den Zugriff auf Elektrizität von der Anordnung versehen ist.

5. Anordnung nach einem der vorstehenden Ansprüche, **dadurch gekennzeichnet, dass** der Mast mit zumindest einer Lampe (6) versehen ist.

## Revendications

1. Aménagement du type poteau, doté d'au moins une turbine à air (4, 4a, b) avec générateur, dans lequel au moins une conduite d'air s'étend à l'intérieur du poteau, ladite conduite comportant un orifice et au moins une admission (3a-d) sur les côtés du poteau, **caractérisé en ce que** ladite turbine à air est agencée sur le haut du poteau et dans la sortie du flux d'air à partir de l'orifice de ladite au moins une conduite, et dans lequel la turbine à air est munie d'un collecteur éolien (10) comportant une admission plus large dirigée vers la turbine et une évacuation qui, par un tuyau de rassemblement (11), génère un flux d'air au niveau de l'orifice de la conduite d'air dirigé vers la turbine.

2. Aménagement selon la revendication 1, **caractérisé en ce que** ladite turbine à air (4, 4a, b) peut être mise en oeuvre sous forme d'un rotor double (4a, b).

3. Aménagement selon la revendication 2, **caractérisé en ce que** ledit double rotor (4a, b) comprend un rotor avant (4a) et un rotor arrière (4b) comportant un nombre égal de pales, les rotors étant décalés l'un par rapport à l'autre de sensiblement la moitié de l'angle entre les pales de rotor voisines.

4. Aménagement selon l'une quelconque des revendications précédentes, **caractérisé en ce que** ledit poteau est muni d'une sortie (9) permettant d'avoir accès à l'électricité à partir de l'aménagement.

5. Aménagement selon l'une quelconque des revendications précédentes, **caractérisé en ce que** ledit poteau est munie d'au moins un lampadaire (6).
